(19) Europäisches Patentamt
European Patent Office
Office européen des brevets

(11) **EP 4 660 278 A1**

(12) **EUROPEAN PATENT APPLICATION**
published in accordance with Art. 153(4) EPC

(43) Date of publication:
**10.12.2025 Bulletin 2025/50**

(21) Application number: **24750173.7**

(22) Date of filing: **26.01.2024**

(51) International Patent Classification (IPC):
**C09K 5/04** (2006.01)    **C10M 105/38** (2006.01)
**C10M 107/24** (2006.01)    **C10M 107/34** (2006.01)
**F25B 1/00** (2006.01)    **C10N 30/00** (2006.01)
**C10N 40/30** (2006.01)

(52) Cooperative Patent Classification (CPC):
**C09K 5/04; C10M 105/38; C10M 107/24;**
**C10M 107/34; F25B 1/00;** C10N 2030/00;
C10N 2040/30

(86) International application number:
**PCT/JP2024/002523**

(87) International publication number:
**WO 2024/162224 (08.08.2024 Gazette 2024/32)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **31.01.2023 JP 2023013601**

(71) Applicant: **AGC INC.**
**Chiyoda-ku,**
**Tokyo 1008405 (JP)**

(72) Inventor: **HAYAMIZU, Hiroki**
**Tokyo 100-8405 (JP)**

(74) Representative: **Müller-Boré & Partner**
**Patentanwälte PartG mbB**
**Friedenheimer Brücke 21**
**80639 München (DE)**

(54) **WORKING MEDIUM, HEAT CYCLE COMPOSITION, HEAT CYCLE DEVICE, AND HEAT CYCLE METHOD**

(57)    A working medium contains (E)-1,3,3,3-tetrafluoropropene, (Z) 1-chloro-2,3,3,3-tetrafluoropropene, and 1,1,1,2-tetrafluoroethane, wherein, with respect to a total content of the (E)-1,3,3,3-tetrafluoropropene, the (Z) 1-chloro-2,3,3,3-tetrafluoropropene, and the 1,1,1,2-tetrafluoroethane, a content of the 1,1,1,2-tetrafluoroethane is 14.5% by mass or less, a content of the (Z) 1-chloro-2,3,3,3-tetrafluoropropene is 10.0% by mass or less, and a content of the (E)-1,3,3,3-tetrafluoropropene is 75.5% by mass or more.

FIG. 1

**Description**

Technical Field

The present disclosure relates to a working medium, a composition for thermal cycle, a thermal cycle device, and a thermal cycle method.

Background Art

Conventionally, chlorofluorocarbons (CFCs) such as chlorotrifluoromethane and dichlorodifluoromethane, and hydrochlorofluorocarbons (HCFCs) such as chlorodifluoromethane have been used as working mediums for thermal cycles, such as refrigerants for refrigeration machines, refrigerants for air conditioners, working mediums for electric power generation systems (such as waste heat recovery electric power generation), working mediums for latent heat transport devices (such as heat pipes), and secondary cooling mediums. However, CFCs and HCFCs are currently subject to regulation due to their impact on the ozone layer in the stratosphere.

In view of the above circumstances, hydrofluorocarbons (HFCs), such as difluoromethane (HFC-32), 1,1,1,2-tetrafluoroethane (HFC-134a), and pentafluoroethane (HFC-125), which have less impact on the ozone layer, have come to be used as working mediums for thermal cycles instead of CFCs and HCFCs.

Among these, HFC-134a is non-flammable and is therefore widely used in car air conditioners and refrigeration equipment. However, a global warming potential (GWP) of HFC-134a is high at 1,300 (5th Assessment Report (2013) AR5). Therefore, there is a demand for the development of refrigerants with low GWP.

Recently, expectations have been focused on hydrofluoroolefins (HFOs) as refrigerants that have less impact on the ozone layer and less impact on global warming. HFO is HFC having a carbon-carbon double bond, and the carbon-carbon double bond is easily decomposed by OH radicals in the atmosphere. In the present disclosure, unless otherwise specified, the term "HFC" refers to saturated HFC, and is used separately from HFO.

For example, Patent Document 1 discloses a refrigerant composition in which (E)-1,3,3,3-tetrafluoropropene (HFO-1234ze(E)) is added to HFC-134a, as a refrigerant using HFO. HFO-1234ze(E) has a GWP of less than 1 (AR5), making it a refrigerant with a low environmental impact. Patent Document 1 discloses that adding HFO-1234ze(E) to HFC-134a reduces the GWP and maintains a temperature glide.

Related Art Document

Patent Document

Patent document 1: Japanese Patent Publication (JP-B) No. 6555315

SUMMARY OF INVENTION

Technical Problem

However, the refrigerant components described in Patent Document 1 contain 36 to 56% by weight of HFC-134a, assuming a total content of HFO-1234ze(E) and HFC-134a to be 100% by weight. In this case, the GWP of the refrigerant composition containing the refrigerant components is large, at 469 to 728, and it is desirable to reduce the environmental impact.

In addition, a flammability of HFO-1234ze(E) is classified as slightly flammable (2L category) according to the standards of the American Society of Heating, Refrigerating and Air-Conditioning Engineers (ASHRAE), and therefore it is desirable to reduce the flammability.

Furthermore, Patent Document 1 states that it is preferable for the HFO-1234ze(E) content to be 44 to 64% by weight, in which case a specific heat ratio is likely to be high and a discharge temperature of the thermal cycle device to be high.

One aspect in the present disclosure has been made in view of the above conventional circumstances,, and aims to provide a working medium in which the GWP and specific heat ratio are reduced, an increase in flammability is suppressed, and a difference between a dew point temperature and a boiling point temperature is suppressed to suppress an increase in temperature glide, as well as a composition for thermal cycle, a thermal cycle device, and a thermal cycle method that use this working medium.

Solution to Problem

The specific means for achieving the above problem include the following.

<1> A working medium including (E)-1,3,3,3-tetrafluoropropene, (Z) 1-chloro-2,3,3,3-tetrafluoropropene, and 1,1,1,2-tetrafluoroethane, in which, with respect to a total content of the (E)-1,3,3,3-tetrafluoropropene, the (Z) 1-chloro-2,3,3,3-tetrafluoropropene, and the 1,1,1,2-tetrafluoroethane,

a content of the 1,1,1,2-tetrafluoroethane is 14.5% by mass or less,
a content of the (Z) 1-chloro-2,3,3,3-tetrafluoropropene is 10.0% by mass or less, and
a content of the (E)-1,3,3,3-tetrafluoropropene is 75.5% by mass or more.

<2> The working medium according to <1>, in which a total content of the (E)-1,3,3,3-tetrafluoropropene, the (Z) 1-chloro-2,3,3,3-tetrafluoropropene and the 1,1,1,2-tetrafluoroethane is 90.0% by mass or more with respect to a total amount of the working medium.
<3> The working medium according to <1> or <2>, in which the content of the (E)-1,3,3,3-tetrafluoropropene is from 80.0 to 90.0% by mass with respect to a total amount of the working medium.
<4> The working medium according to any one of <1> to <3>, in which the air concentration at 25°C in a gas phase of the working medium is 3.5% by volume or less.
<5> The working medium according to <4>, in which, with respect to the total amount of the working medium,

a content of the (E)-1,3,3,3-tetrafluoropropene is 86.5% by mass or less, and
a content of the 1,1,1,2-tetrafluoroethane is 14.0% by mass or less.

<6> A composition for thermal cycle, the composition including the working medium according to any one of <1> to <5> and a refrigerating machine oil.
<7> The composition for thermal cycle according to <6>, in which the refrigerating machine oil is at least one selected from the group consisting of a polyalkylene glycol oil, a polyol ester oil, a polyvinyl ether oil, a hydrocarbon synthetic oil, and a mineral oil.
<8> The composition for thermal cycle according to <6> or <7>, in which the refrigerating machine oil has a kinetic viscosity of 700 mm$^2$/s or less at 40°C.
<9> A thermal cycle device including:

the working medium according to any one of <1> to <5>;
a compressor to compress a vapor of the working medium;
a condenser to cool and liquefy a vapor of the working medium discharged from the compressor;
a pressure reducing device to reduce a pressure of the working medium discharged from the condenser; and
an evaporator to heat the working medium discharged from the pressure reducing device.

<10> A thermal cycle device including:

the working medium according to <3>;
a compressor to compress a vapor of the working medium;
a condenser to cool and liquefy a vapor of the working medium discharged from the compressor;
a pressure reducing device to reduce the pressure of the working medium discharged from the condenser; and
an evaporator to heat the working medium discharged from the pressure reducing device,
in which the evaporator is controlled so that an evaporation temperature of the working medium is from -40°C to 7°C.

<11> The thermal cycle device according to <10>, in which the evaporator is controlled so that the evaporation temperature of the working medium is from -25°C to 7°C.
<12> The thermal cycle device according to <11>, in which the evaporator is controlled so that the evaporation temperature of the working medium is from -15°C and 7°C.
<13> The thermal cycle device according to any one of <9> to <12>, in which at least a portion of a surface of a component configuring the thermal cycle device that comes into contact with the working medium includes at least one material selected from the group consisting of copper and copper alloys.
<14> The thermal cycle device according to <13>, in which the component is at least one selected from the group consisting of the compressor, the condenser, the evaporator, and a refrigerant pipe.

<15> A thermal cycle method including:

compressing a vapor of the working medium according to any one of <1> to <5>;
cooling and liquefying a vapor of the working medium;
reducing a pressure of the working medium after liquefying; and
heating the decompressed working medium after the reducing.

<16> A thermal cycle method including:

compressing a vapor of the working medium according to <3>;
cooling and liquefying a vapor of the working medium;
reducing the pressure of the working medium after liquefying; and
heating the decompressed working medium at an evaporation temperature of from -40°C to 7°C after reducing.

Advantageous Effects of Invention

According to one aspect in the present disclosure, there is provided a working medium in which the GWP and specific heat ratio are reduced, an increase in flammability is suppressed, and a difference between a dew point temperature and a boiling point temperature is suppressed to suppress an increase in temperature glide, as well as a composition for thermal cycle, a thermal cycle device, and a thermal cycle method that use this working medium.

BRIEF DESCRIPTION OF DRAWINGS

FIG.1 is a schematic diagram showing an example of a refrigeration cycle device.
FIG.2 is a cycle diagram showing a state change of a working medium in a refrigeration cycle device on a pressure-enthalpy chart.
FIG.3 is a cycle diagram showing a state change of a working medium in a refrigeration cycle device on a temperature-entropy chart.

DESCRIPTION OF EMBODIMENTS

Hereinafter, embodiments in the present disclosure will be described in detail. However, the present disclosure is not limited to the following embodiments. In the following embodiments, unless specifically stated otherwise, the components (including elemental steps and the like) are not essential. The same applies to numerical values and ranges thereof, which do not limit the present disclosure.
In the present disclosure, numerical ranges indicated by "to" mean ranges that include the respective numerical values described before and after the "to" as the minimum and maximum values.
In numerical ranges described in a stepwise manner in the present disclosure, the upper limit value or lower limit value of one range may be replaced with the upper limit value or lower limit value of another stepwise-described range. Additionally, in the numerical ranges described in the present disclosure, the upper limit value or lower limit value of one range may be replaced with a value shown in the examples.
In the present disclosure, the amount of each component in a composition refers, unless otherwise specified, to the total amount of multiple substances corresponding to that component when multiple such substances are present in the composition.
In the present disclosure, pressure refers to absolute pressure, which is 101.3 kPa at atmospheric pressure.
In the present disclosure, saturated vapor pressure refers to the pressure of saturated vapor, and means the pressure at the intersection point of an isotherm line and a saturated vapor line on a pressure-enthalpy chart.
In the present disclosure, saturated liquid pressure refers to the pressure of saturated liquid, and means the pressure at the intersection point of an isotherm and a saturated liquid line on a pressure-enthalpy chart.

<Working medium>

A working medium disclosed in the present disclosure contains (E)-1,3,3,3-tetrafluoropropene, (Z) 1-chloro-2,3,3,3-tetrafluoropropene (HCFO-1224yd(Z)), and 1,1,1,2-tetrafluoroethane, and with respect to a total content of the (E)-1,3,3,3-tetrafluoropropene, the (Z) 1-chloro-2,3,3,3-tetrafluoropropene, and the 1,1,1,2-tetrafluoroethane, a content of the 1,1,1,2-tetrafluoroethane is 14.5% by mass or less, a content of the (Z) 1-chloro-2,3,3,3-tetrafluoropropene is 10.0% by mass or less, and a content of the (E)-1,3,3,3-tetrafluoropropene is 75.5% by mass or more.

Hereinafter, HFO-1234ze(E), HCFO-1224yd(Z), and HFC-134a are also referred to as specific components.

In the present disclosure, the working medium refers to a medium that carries heat, and is a concept that includes a refrigerant composition and a heat transfer medium composition. The refrigerant composition is a medium that mainly cools a heat source, but may also be used as a medium that heats a heat source. The heat transfer medium composition is a medium that mainly heats a heat source, but may also be used as a medium that cools a heat source.

The working medium in the present disclosure is preferably used for a thermal cycle. Specifically, the working medium in the present disclosure is preferably used in a thermal cycle device in which a series of changes occurs, involving heat absorption and heat release to cause state changes, and then returning to the initial state.

By using a working medium with the above configuration, the GWP and specific heat ratio are reduced, the increase in flammability is suppressed, and the increase in temperature glide is suppressed by suppressing the difference between the dew point temperature and the boiling point temperature. The reason for this is considered as follows.

The working medium contains, in addition to HFO-1234ze(E) having a GWP of 1, HCFO-1224yd(Z) having a GWP of less than 1, together with HFC-134a having a high GWP of 1300, and therefore the overall GWP is reduced.

Furthermore, the specific heat ratio of HFC-134a is 1.1195, while that of HFO-1234ze (E) is 1.1014. In contrast, the specific heat ratio of HCFO-1224yd (Z) is low at 1.0983. Therefore, by adding HCFO-1224yd (Z) to HFC-134a and HFO-1234ze (E), the specific heat ratio can be lowered, making it possible to lower the discharge temperature of the thermal cycle device.

Furthermore, by adding HCFO-1224yd(Z), which has a flammability category of 1 (ASHRAE standard), to HFO-1234ze(E), which has a flammability category of 2L and is slightly flammable, the increase in flammability is suppressed.

The boiling point of HFC-134a is -26.074°C, that of HFO-1234ze(E) is -18.973°C, and that of HCFO-1224yd(Z) is 14.617°C. Therefore, the temperature glide is maintained by keeping a content of HCFO-1224yd(Z) at 10.0 % by mass or less with respect to a total content of the specific components.

In consideration of the balance of these performances, a content of HFC-134a is set to 14.5 % by mass or less with respect to a total content of the specific components, and a content of HFO-1234ze(E) is set to 75.5 % by mass or more with respect to a total content of the specific components.

Each component which may be contained in the working medium in the present disclosure will be explained in detail below.

(Each component)

The content of HFC-134a is 14.5 % by mass or less with respect to a total content of the specific components, and from the viewpoint of lowering the GWP and specific heat ratio, it is preferably 14.0 % by mass or less, more preferably 12.0 % by mass or less, and even more preferably 10.0 % by mass or less.

Since the working medium in the present disclosure contains HFC-134a, the content of HFC-134a is more than 0 % by mass with respect to the total content of the specific components. From the viewpoint of reducing flammability and balancing each performance, the content of HFC-134a may be 3.0 % by mass or more, or 5.0 % by mass or more, with respect to the total content of the specific components.

The content of HCFO-1224yd(Z) is 10.0 % by mass or less, with respect to the total content of the specific components, and from the viewpoint of suppressing a difference between the dew point temperature and the boiling point temperature, it is preferably 9.0 % by mass or less, more preferably 8.0 % by mass or less, and even more preferably 7.0 % by mass or less.

Since the working medium in the present disclosure contains HCFO-1224yd(Z), the content of HCFO-1224yd(Z) is more than 0 % by mass with respect to the total content of the specific components. From the viewpoint of lowering the GWP and flammability, lowering the specific heat ratio to lower the discharge temperature of the thermal cycle device, and balancing each performance, the content of HCFO-1224yd(Z) may be 3.0 % by mass or more, or 5.0 % by mass or more, with respect to the total content of the specific components.

From the viewpoint of lowering the GWP and the difference between the dew point temperature and the boiling point temperature, and lowering the specific heat ratio to lower the discharge temperature, the content of HFO-1234ze(E) is 75.5 % by mass or more, preferably 80.0 % by mass or more, more preferably 81.0 % by mass or more, and even more preferably 82.0 % by mass or more, with respect to the total content of the specific components.

Furthermore, from the viewpoint of lowering the heat of combustion due to low flammability, the content of HFO-1234ze(E) is preferably 90.0 % by mass or less, more preferably 87.0 % by mass or less, and even more preferably 85.0 % by mass or less, with respect to the total content of the specific components.

The content of HFO-1234ze(E) is preferably from 80.0 to 90.0 % by mass with respect to a total amount of the working medium, more preferably from 80.0 to 85.0 % by mass, and even more preferably from 82.0 to 85.0 % by mass. In a case in which the content of HFO-1234ze(E) with respect to the total amount of the working medium is set within the above range, the heat of combustion of the working medium is reduced, and in a thermal cycle device or thermal cycle method, when the depressurized working medium is heated at an evaporation temperature of from - 40 to 7°C, the discharge temperature tends to decrease.

From the viewpoint of the difference between the dew point temperature and the boiling point temperature, a mass ratio of the content of HCFO-1224yd(Z) to the content of HFO-1234ze(E) (i.e., HCFO-1224yd(Z) : HFO-1234ze(E)) is preferably 1.0 : 99.0 to 13.3 : 86.7, and more preferably 1.0 : 99.0 to 11.6 : 88.4.

From the viewpoint of the specific heat ratio, a mass ratio of the content of HFC-134a to the content of HFO-1234ze(E) (i.e., HFC-134a : HFO-1234ze(E)) is preferably 1.0 : 99.0 to 16.1 : 83.9, and more preferably 1.0 : 99.0 to 14.5 : 85.5.

From the viewpoint of suppressing the influence on the difference between the dew point temperature and the boiling point temperature, GWP, flammability and specific heat ratio of the working medium, the total content of the specific components is preferably 90.0% by mass or more, more preferably 95.0% by mass or more, even more preferably 99.0% by mass or more, particularly preferably 99.5% by mass or more, and may be 100% by mass, with respect to the total amount of the working medium.

Furthermore, in the thermal cycle device or thermal cycle method, from the viewpoint of lowering the discharge temperature while ensuring the evaporation pressure when the depressurized working medium is heated at an evaporation temperature of from -40 to 7°C, the total content of the specific components is preferably 99.0 % by mass or more, more preferably 99.5 % by mass or more, and may be 100 % by mass, with respect to the total amount of the working medium.

The working medium in the present disclosure may contain other working medium components other than the specific components. Examples of the other components include a HFO other than HFO-1234ze(E), a HCFO other than HCFO-1224yd(Z), a HFC other than HFC-134a, a hydrocarbon, and a chlorofluoroolefin (CFO). The other components are preferably those that have little impact on the ozone layer and little impact on global warming. The other working medium components may be used singly or in combination of two or more.

Note that HCFO (hydrochlorofluoroolefin) is a type of HCFC, but are used separately from HCFCs because it has a carbon-carbon double bond.

Examples of other HFO include (Z)-1,3,3,3-tetrafluoropropene (HFO-1234ze(Z)), trifluoroethylene (HFO-1123), 1,1-difluoroethylene (HFO-1132a), (Z)-1,2-difluoroethylene (HFO-1132(Z)), (E)-1,2-difluoroethylene (HFO-1132(E)), 2-fluoropropene (HFO-1261yf), 1,1,2-trifluoropropene (HFO-1243yc), and 3,3,3-trifluoropropene. (HFO-1243zf), 2,3,3,3-tetrafluoropropene (HFO-1234yf), 1,1,2,3,3-pentafluoropropene (HFO-1225yc), 1,2,3,3,3-pentafluoropropene (HFO-1225ye), 2,4,4,4-tetrafluorobutene (HFO-1354yf), (Z)-1,1,1,4,4,4-hexafluorobutene (HFO-1336mzz(Z)), and (E)-1,1,1,4,4,4-hexafluorobutene (HFO-1336mzz(E)).

Examples of other HCFO include (E) 1-chloro-2,3,3,3-tetrafluoropropene (HCFO-1224yd(E)), 2-chloro-1,1,3,3-tetrafluoropropene (HCFO-1224xc), 2-chloro-1,3,3,3-tetrafluoropropene (HCFO-1224xe), 1-chloro-2,2-difluoroethylene (HCFO-1122), 1-chloro-1,2-difluoroethylene (HCFO-1122a), (E)-1-chloro-3,3,3-trifluoropropene (HCFO-1233zd(E)), (Z)-1-chloro-3,3,3-trifluoropropene (HCFO-1233zd(Z)), 2-chloro-1,1,3-trifluoropropene (HCFO-1233xc), and 2-chloro-3,3,3-trifluoropropene (HCFO-1233xf).

Examples of other HFC include difluoromethane (HFC-32), fluoroethane (HFC-161), 1,1-difluoroethane (HFC-152a), 1,1,1-trifluoroethane (HFC-143a), 1,1,2,2-tetrafluoroethane (HFC-134), 1,1,1,2,2-pentafluoroethane (HFC-125), pentafluoropropane, hexafluoropropane, 1,1,1,2,3,3,3-heptafluoropropane (HFC-227ea), pentafluorobutane, and heptafluorocyclopentane.

Examples of the hydrocarbon include propylene, propane, cyclopropane, butane, isobutane, pentane, and isopentane.

Examples of the CFO include 1,1-dichloro-2,3,3,3-tetrafluoropropene (CFO-1214ya), 1,3-dichloro-1,2,3,3-tetrafluoropropene (CFO-1214yb), and 1,2-dichloro-1,2-difluoroethylene (CFO-1112).

A total content of other working medium component is preferably less than 10% by mass, more preferably less than 5% by mass, even more preferably less than 1% by mass, particularly preferably less than 0.5% by mass, and may be 0% by mass, with respect to the total amount of the working medium.

A water content in the working medium is preferably 20 ppm by mass or less, and more preferably 15 ppm by mass or less, with respect to the total amount of the working medium, as the moisture content measured by Karl Fischer coulometric titration. In a case in which the water content is 20 ppm by mass or less, freezing in the capillary tube, which is an example of a pressure reducing device in a thermal cycle device, hydrolysis of the working medium and refrigerating machine oil, material deterioration due to acid components generated in the device, generation of contaminants, or the like are suppressed.

An air content in a gas phase of the working medium at 25°C is preferably 3.5% by volume or less, more preferably 2.5% by volume or less, even more preferably 2.0% by volume or less, and most preferably 1.5% by volume or less, as an air concentration measured by gas chromatography. In a case in which the air content is 3.5% by volume or less, the discoloration of the copper surface to brown and the generation of rust are suppressed on the copper surface, which is a surface in contact with the working medium in the thermal cycle device. This is presumed to be due to the suppression of the decomposition of the working medium or refrigerating machine oil caused by the reaction between oxygen in the air and the working medium or refrigerating machine oil.

It should be noted that it has been found during the development of the working medium of the present disclosure that the effects of the working medium vary depending on the type of metal. It has been found that steels, aluminum and the like are little or not affected by the working medium, whereas copper and copper alloys have a specific problem in that discoloration to brown or rust occurs due to the working medium.

In view of such characteristics specific to copper and copper alloys, it has been found that in a case in which the air content is 3.5% by volume or less, there is an advantage that discoloration of the surface to brown and generation of rust are suppressed even for copper and copper alloys, which have excellent thermal conductivity, electrical conductivity, strength, corrosion resistance, flexibility, workability, and installability.

Copper and copper alloys, having the above excellent properties, are widely used in components constituting thermal cycle devices such as refrigeration air conditioning equipment. Examples of such parts include compressors, condensers, evaporators, and refrigerant piping.

However, in a case in a surface of copper and copper alloys becomes discolored and deteriorated, there is a risk that the above-mentioned excellent performance will be lost.

Since flexibility and strength are required for refrigerant piping, the entire refrigerant piping is often made of copper and copper alloys. In a case in which the surface of copper or copper alloy becomes discolored or deteriorated, there is a concern that the flexibility and strength of the refrigerant piping may be reduced.

In condensers and evaporators, copper or copper alloys having high thermal conductivity are often used from the viewpoint of heat transfer, and the entire structure is often made of copper and copper alloys. In some cases, grooves are formed on the surfaces of the condensers and evaporators to further improve heat transfer performance. In a case in which the surfaces of the copper or copper alloys become discolored to brown and rust is generated, there is a concern that the heat transfer performance of the condensers and evaporators may deteriorate.

In compressors, copper or copper alloys are used in the winding sections and connecting pipe sections inside the compressor. In a case in which the surface of the winding section becomes discolored and deteriorated, there is a concern that the insulation or electrical conductivity may be reduced. As a result, the performance and reliability of the compressor may be degraded, and the working medium or the composition for a thermal cycle may leak from the compressor. In a case in which the working medium or the composition for a thermal cycle leaks, the composition of the refrigerant in the thermal cycle device may change.

From such a viewpoint, it is preferable in a thermal cycle device that discoloration of the surfaces of copper and copper alloys to brown and the generation of rust be suppressed.

From the perspective of further suppressing discoloration and rusting of the surface of copper and copper alloy, in a case in which the air concentration at 25°C in the gas phase of the working medium is 3.5% by volume or less, the content of HFO-1234ze(E) is preferably 86.5% by mass or less, and more preferably 85.0% by mass or less, with respect to the total amount of the working medium.

In addition, from the viewpoint of further the discoloration of the surface of copper and copper alloys to brown and the occurrence of rust, in a case in which the air concentration at 25°C in the gas phase of the working medium is 3.5% by volume or less, the content of HFC-134a is preferably 14.0% by mass or less, more preferably 12.0% by mass or less, and even more preferably 10.0% by mass or less, with respect to the total amount of the working medium.

In view of the above, from the viewpoint of further suppressing the discoloration of the surface of copper and copper alloys to blown and the occurrence of rust, in a case in which the air concentration at 25°C in the gas phase of the working medium is 3.5% by volume or less, it is preferable that the content of HFO-1234ze(E) is 86.5% by mass or less and the content of HFC-134a is 14.0% by mass or less, more preferable that the content of HFO-1234ze(E) is 85.0% by mass or less and the content of HFC-134a is 12.0% by mass or less, and even more preferable that the content of HFO-1234ze(E) is 85.0% by mass or less and the content of HFC-134a is 10.0% by mass or less, with respect to the total amount of the working medium.

Another embodiment of the working medium in the present disclosure may be a working medium containing HFO-1234ze(E), HCFO-1224yd(Z), and HFC-134a, from the viewpoint of further suppressing the discoloration of the surface of copper and copper alloys to blown and the occurrence of rust, in which the air concentration at 25°C in the gas phase of the working medium is 3.5% by volume or less, and the content of HFO-1234ze(E) is 86.5% by mass or less and the content of HFC-134a is 14.0% by mass or less, with respect to the total amount of the working medium.

In the above-mentioned another embodiment of the working medium, it is preferable that the content of HFO-1234ze(E) is preferably 85.0% by mass or less and the content of HFC-134a is preferably 12.0% by mass or less, and more preferable that the content of HFO-1234ze(E) is 85.0% by mass or less and the content of HFC-134a is 10.0% by mass or less, with respect to the total amount of the working medium.

The working medium may contain an unavoidable component such as an impurity by-produced during the production of the specific component and a solvent used during the production. From the viewpoint of ensuring stability, a total content of the unavoidable component is preferably 1.5% by mass or less, more preferably 1.0% by mass or less, even more preferably 0.7% by mass or less, and particularly preferably 0.5% by mass or less, with respect to the total amount of the working medium. From the viewpoint of simplifying the refining process in the production of the specific component or the like, the total content of the unavoidable component may be 50.0 ppm by mass or more, or may be 100.0 ppm by mass or more.

Examples of the unavoidable component include 1,1,2,2,3-pentafluoro-1,3-dichloropropane (HCFC-225cb), 1,1,1,2-tetrafluoropropane (HFC-254eb), 1,3,3,3-tetrafluoropropane (HFC-254fb), 1,1,2,3-tetrafluorobutane (HFC-374pee), CFO-1214ya, HCFO-1224yd(E), (Z)-2-chloro-1,3,3,3-tetrafluoropropene (HCFO-1224xe(Z)), (E)-2-chloro-1,3,3,3-tetrafluoropropene (HCFO-1224xe(E)), HCFO-1233xf, HFO-1234yf, HFO-1234ze(Z), HFO-1354yf, HCFO-1233zd(E), HCFO-1233zd(Z), HCFO-1233xc, fluorinated hydrocarbons represented by $C_4H_4F_4$, 2-chloro-1,1,1,2-tetrafluoropropane (HCFC-244bb), HFC-245fa, 2-chloro-1,1,3,3,3-pentafluoro-1-propene (CFO-1215xc), 3,3-dichloro-1,1,1,2,2-pentafluoropropane (HCFC-225ca), 1,1,1,2,2,3,3-heptafluoropropane (FC-227ca), methanol, ethanol, acetone, chloroform, and hexane.

(Performance and the like)

A GWP of the working medium is preferably 190 or less, and more preferably 150 or less.

In the present disclosure, unless otherwise specified, the GWP is the 100-year value in the Fifth Assessment Report (2013) (AR5) of the Intergovernmental Panel on Climate Change (IPCC). If not stated in AR5, the value is taken from the Scientific Assessment of Ozone Depletion 2018, J. Phys. Chem. A 2018, 122, 4593-4600, and the EPA Greenhouse Gas Reporting Program: Addition of Global Warming Potentials 2014.

The GWP of a mixture is the weighted average with respect to the composition mass. When considering the GWP of a mixture, any mixture with a GWP of 1 or less is calculated as 1.

A specific heat ratio of the working medium is preferably 1.104 or less, and more preferably 1.103 or less. The lower the specific heat ratio, the better, but it may be 1.100 or more, or 1.101 or more.

The specific heat ratio is expressed as the ratio ($C_P/C_V$) of the specific heat at constant pressure ($C_P$) of the gas to the specific heat at constant volume (Cv) of the gas. The specific heat at constant pressure and the specific heat at constant volume are values under standard conditions of 25°C and atmospheric pressure, and are calculated using the National Institute of Science and Technology (NIST) Reference Fluid Thermodynamic and Transport Properties Database (REFPROP 10.0).

A heat of combustion of the working medium is preferably 9.850 MJ/kg or less, more preferably 9.830 MJ/kg or less, and even more preferably 9.800 MJ/kg or less. There is no particular lower limit for the heat of combustion of the working medium, and it may be 9.260 MJ/kg or more, 9.280 MJ/kg or more, or 9.300 MJ/kg or more.

The heat of combustion per unit mass (MJ/kg) is defined by the American Society of Heating, Refrigeration and Air-conditioning Engineers (ASHRAE) standard 34 as an index for determining the flammability of a refrigerant.

The heat of combustion is expressed as the difference between the sum of the enthalpies of formation of product of the production system in the combustion reaction equation and the enthalpies of formation of the compounds of the reaction system. The enthalpies of formation are listed in chemical handbooks, international standards (see Reference A), various handbooks, and the like.

The enthalpies of formation for new compounds can be calculated using Benson's group additivity rule (see Reference B) or computational chemistry techniques.

The concept of the combustion reaction equation for compounds containing a halogen is also specified in international standards (see References A and C).

Reference A: ANSI/ASHRAE Standard 34 (2016), Designation and Safety Classification of Refrigerants.

Reference B: S. Benson, Thermo chemical kinetics, 2nd Ed., Wiley Interscience, New York (1976).

Reference C: ISO 817 (2014), Refrigerant: Designation and Safety Classification.

In this standard, the heat of combustion is considered positive for exothermic reactions.

In the present disclosure, the heat of combustion of a working medium is a theoretical value calculated under the following assumptions, which is a value obtained by converting a value of the heat of combustion obtained by completely combusting 1 mole of the working medium with oxygen stoichiometrically into a value of the heat of combustion per 1 kg of the working medium.

The compounds in the production system and the reaction system are assumed to be gases.

The combustion products are HF(g), $CO_2$(g), $COF_2$(g) and $H_2O$(g). In addition, in acase in which chlorine, nitrogen and iodine are part of the molecular structure of a substance, $Cl_2$(g), $N_2$(g) or $I_2$(g) are added as combustion products.

When calculating the heat of combustion of a working medium, each compound contained in the working medium is decomposed into the atoms constituting the compound, and, taking into account the molar ratio in the working medium, a virtual substance containing the respective atoms are defined. The heat of combustion is calculated using the combustion reaction formula of the virtual substance. Note that $C_qH_rF_s$ in the formula below corresponds to the virtual substance.

For example, the combustion reaction formula is defined by a number of H atoms (r) and a number of F atoms (s) in a substance, and the following formula is used for the combustion reaction formula when the number of H atoms (r) is the number of F atoms (s) or more:

$$C_qH_rF_s + \left(q + \frac{r-s}{4}\right)O_2 = sHF + qCO_2 + \frac{r-s}{2}H_2O \qquad (r \geq s)$$

On the other hand, when the number of H atoms (r) is less than the number of F atoms (s), the following combustion reaction formula is used:

$$C_qH_rF_s + \left(q - \frac{s-r}{4}\right)O_2 = rHF + \frac{s-r}{2}COF_2 + \left(q - \frac{s-r}{2}\right)CO_2 \qquad (r < s)$$

The working medium in the present disclosure contains HCFO-1224yd(Z), and therefore also contains $Cl_2(g)$ as a combustion product. However, since $Cl_2$ has a standard enthalpy of formation of zero, it does not affect the value of the heat of combustion.

A cycle performance, which is a property required when applying a working medium to a thermal cycle device, can be evaluated by the coefficient of performance (also referred to as "COP" in the present disclosure) and the capacity per unit volume (compressor suction volume) (also referred to as "CAP" in the present disclosure). In a case in which the thermal cycle device is a refrigeration cycle device, the capacity is the refrigeration capacity.

In addition to the cycle performance described above, the evaluation items when applying a working medium to a refrigeration cycle device further include a temperature gradient in a evaporator and a condenser (also referred to as "temperature glide" in the present disclosure), a discharge temperature, a condensation pressure, and an evaporation pressure. Specifically, a reference refrigeration cycle with the conditions shown below is used to evaluate each item, for example, by the method described below.

-Conditions for the standard refrigeration cycle-

Evaporation temperature: 0°C (However, in the case of a non-azeotropic mixture, the evaporation temperature is calculated as the average temperature of the evaporation start temperature and the evaporation end temperature, and therefore the evaporation temperature is calculated as (evaporation start temperature + evaporation end temperature) / 2.)

Condensation temperature: 45°C (However, in the case of a non-azeotropic mixture, the condensation temperature is calculated as the average temperature of the condensation start temperature and the condensation end temperature, and therefore the condensation temperature is calculated as (condensation start temperature + condensation end temperature) / 2.)

Subcooling degree (SC): 0°C
Superheat degree (SH): 5°C
Compressor efficiency: 0.7

Under the above conditions, the COP of the working medium in the present disclosure is preferably 0.995 or more, more preferably 0.996 or more, and even more preferably 0.997 or more, as a relative value with the COP of HFC-134a defined as 1.00.

Under the above conditions, the CAP of the working medium in the present disclosure is preferably 0.685 or more, more preferably 0.690 or more, and even more preferably 0.700 or more, as a relative value with the CAP of HFC-134a defined as 1.00.

CAP and COP are determined by the method described below.

The temperature glide is an index that measures the difference in composition between the liquid phase and the gas phase of a mixture working medium. The temperature glide is defined as the property in which a start temperature and an end temperature of evaporation in a heat exchanger, for example, evaporation in an evaporator or condensation in a condenser, are different. In the present disclosure, the property of the start temperature and end temperature of evaporation in an evaporator being different is referred to as "evaporation glide". Also, the property of the start temperature and end temperature of condensation in a condenser being different is referred to as "condensation glide". Evaporation glide and condensation glide are collectively referred to as "temperature glide". In the case of an azeotropic mixture, the temperature glide is zero, and in the case of a pseudo-azeotropic mixture, the temperature glide is very close to zero.

In a case in which the temperature glide is large, for example, the inlet temperature of the evaporator decreases, which increases the possibility of frost formation and may cause a problem. Furthermore, in thermal cycle apparatuses, it is common to employ counterflow between the working medium flowing through the heat exchanger and the heat source fluid, such as water or air, in order to improve heat exchange efficiency. In a stable operating state, the temperature difference of the heat source fluid is small, and therefore in the case of non-azeotropic mixtures with a large temperature glide, it is difficult to achieve a thermally efficient thermal cycle apparatus. For this reason, when using a mixture as a working medium, a working medium with an appropriate temperature glide is desired.

Furthermore, non-azeotropic mixtures may have the problem that their composition may change when they are charged from a pressure-resistant vessel into a refrigeration air conditioning device. Furthermore, in a case in which a refrigerant leaks from a refrigeration air conditioning device, the refrigerant composition in the refrigeration air conditioning device is very likely to change, making it difficult to restore the refrigerant composition to its initial state. On the other hand, in a case in which an azeotropic or pseudo-azeotropic mixed medium is used, the above problems can be avoided.

From the above viewpoint, the evaporation glide of the working medium in the present disclosure is preferably 3.0°C or less, and more preferably 2.7°C or less.

From the above viewpoint, the condensation glide of the working medium in the present disclosure is preferably 3.0°C or less, and more preferably 2.8°C or less.

As explained above, in order to suppress the rise in temperature glide, in the working medium in the present disclosure, the difference between the dew point temperature and the boiling point temperature is preferably 4.00°C or less, and more preferably 3.50°C or less. The lower limit of the difference between the dew point temperature and the boiling point temperature is not particularly limited, and may be 0.50°C or more, or may be 1.00°C or more. The dew point and boiling point in the difference between the dew point temperature and the boiling point temperature are values at atmospheric pressure (101.3 kPa).

<Compression ratio>

The compression ratio is expressed as the condensation pressure Pc (MPa) / evaporation pressure Pe (MPa) in the refrigeration cycle. The compression ratio becomes smaller as the condensation pressure in the refrigeration cycle decreases and as the evaporation pressure increases. The smaller the compression ratio, the greater the volumetric efficiency of the compressor, and therefore an amount of refrigerant circulating increases, improving equipment performance.

From the viewpoint of improving the performance of the refrigeration cycle, the Pc of the working medium in the present disclosure is preferably 0.65 or more, more preferably 0.68 or more, and even more preferably 0.70 or more, as a relative value with the Pc of HFC-134a being 1.00. The upper limit of Pc is not particularly limited, and may be 1.00 or less, or may be 0.95 or less.

From the viewpoint of reducing the load related to the intake of the working medium into the compressor, the Pe of the working medium in the present disclosure is preferably 0.50 or more, more preferably 0.55 or more, and even more preferably 0.60 or more, as a relative value with the Pe of HFC-134a being 1.00. The upper limit of Pe is not particularly limited, and may be 1.00 or less, or may be 0.95 or less.

From the above viewpoint, the Pe of the working medium in the present disclosure is preferably 0.0250 MPa or more, more preferably 0.0600 MPa or more, and even more preferably 0.1013 MPa or more. The upper limit of Pe is not particularly limited, and may be 1.0000 MPa or less, or 0.5000 MPa or less.

The working medium in the present disclosure is preferably used in a thermal cycle device. The thermal cycle device may be a heat pump system that uses hot heat obtained in a condenser, or a refrigeration cycle system that uses cold heat obtained in an evaporator.

Specific examples of thermal cycle devices include refrigeration and cooling equipment, air conditioning equipment, heating and hot water equipment, electric power generation systems, heat transport devices, and secondary cooling machines. Among them, the thermal cycle device is preferably used as air conditioning equipment that is often installed outdoors and the like, because it can stably and safely demonstrate thermal cycle performance even in a higher temperature operating environment. It is also preferable that the thermal cycle device is used as chilling and freezing equipment.

Specific examples of air conditioning equipment include room air conditioners, packaged air conditioners (packaged air conditioners for stores, packaged air conditioners for buildings, packaged air conditioners for facilities, and the like), gas engine heat pumps, train air conditioners, and automotive air conditioners.

The automotive air conditioner is preferably air conditioners for gasoline vehicles, air conditioners for hybrid vehicles, air conditioners for electric vehicles, and air conditioners for hydrogen vehicles, and more preferably air conditioners for electric vehicles .

Specific examples of chilling and freezing equipment include refrigerated displays (refrigerated showcases, freezer showcases, and the like), refrigerators, freezers, water chilling equipment, chilling and freezing units, freezers for chilling and freezing warehouses, centrifugal refrigerating machines, Screw refrigerating machines, vending machines, and ice makers.

Specific examples of heating and hot water equipment include heat pump water heaters, heat pump hot water heaters, heat pump hot air heaters, steam hot air generating heat pumps, and exhaust heat recovery heat pumps.

Preferable examples of the electric power generation system include electric power generation systems using the Rankine cycle system. Specific examples of the electric power generation system include systems in which a working medium is heated in an evaporator using geothermal energy, solar heat, or waste heat having medium- to high-temperature such as about from 50 to 200°C, thereby becoming high-temperature, high-pressure vapor, this vapor is adiabatically expanded in an expander, and the work generated by the adiabatic expansion drives a generator to generate electricity.

The heat transport device is preferably a latent heat transport device. Examples of the latent heat transport device include a heat pipe and a two-phase closed thermosiphon device that transport latent heat by utilizing a phenomenon of evaporation, boiling, condensation or the like of the working medium enclosed in the device. The heat pipe is applied to relatively small cooling devices such as a cooling device for a heat generating part of a semiconductor element and an electronic device. The two-phase closed thermosiphon device have a simple structure without a wig, and therefore it is widely used in a gas-gas type heat exchanger, a promotion of snow melting on a road, and a prevention of freezing or the like.

<Composition for thermal cycle>

The composition for thermal cycle in the present disclosure contains the working medium in the present disclosure and a refrigerating machine oil.

In a case in which the working medium in the present disclosure is applied to a thermal cycle device, it can be mixed with a refrigerating machine oil and used as a composition for thermal cycle. The composition for thermal cycle in the present disclosure may further contain a known additive such as a stabilizer and a leak detection substance.

(Refrigerating machine oil)

As the refrigerating machine oil, a known refrigerating machine oil used in a thermal cycle device may be used.

In a thermal cycle device, it is preferable that the refrigerating machine oil has sufficient compatibility with the working medium under low temperature conditions while ensuring lubricity and airtightness of the compressor. From this viewpoint, a kinetic viscosity of the refrigerating machine oil at 40°C is preferably 700 $mm^2$/s or less, more preferably 400 $mm^2$/s or less, and more preferably 300 $mm^2$/s or less. In addition, a kinetic viscosity at 100°C is preferably 100 $mm^2$/s or less, more preferably 70 $mm^2$/s or less, and even more preferably 50 $mm^2$/s or less.

Specific examples of the refrigerating machine oil include an oxygen-containing synthetic oils (an ester-based refrigerating machine oil, an ether-based refrigerating machine oil and the like), a hydrocarbon-based synthetic oil (an alkylbenzene oil and the like), a fluorine-based refrigerating machine oil, a mineral-based refrigerating machine oil, a silicone oil, and a hydrocarbon-based synthetic oil. The refrigerating machine oil may be used singly or in combination of two or more types.

Examples of the ester-based refrigerating machine oil include a dibasic acid ester oil, a polyol ester oil, a complex ester oil, and a polyol carbonate ester oil.

The dibasic acid ester oil is preferably a ester of a dibasic acid having from 5 to 10 carbon atoms (glutaric acid, adipic acid, pimelic acid, suberic acid, azelaic acid, sebacic acid or the like) and a monohydric alcohol having from 1 to 15 carbon atoms and linear or branched alkyl groups (methanol, ethanol, propanol, butanol, pentanol, hexanol, heptanol, octanol, nonanol, decanol, undecanol, dodecanol, tridecanol, tetradecanol, pentadecanol or the like). The dibasic acid ester oil is preferably ditridecyl glutarate, di(2-ethylhexyl) adipate, diisodecyl adipate, ditridecyl adipate, or di(3-ethylhexyl) sebacate.

The polyol ester oil is preferably an ester of a diol (ethylene glycol, 1,3-propanediol, propylene glycol, 1,4-butanediol, 1,2-butanediol, 1,5-pentanediol, neopentyl glycol, 1,7-heptanediol, 1,12-dodecanediol or the like) or a polyol having from 3 to 20 hydroxyl groups (trimethylolethane, trimethylolpropane, trimethylolbutane, pentaerythritol, glycerin, sorbitol, sorbitan, a sorbitol glycerin condensate or the like) with a fatty acid having from 6 to 20 carbon atoms (a straight-chain or branched fatty acid such as hexanoic acid, heptanoic acid, octanoic acid, nonanoic acid, decanoic acid, undecanoic acid, dodecanoic acid, eicosanoic acid, oleic acid or the like; so-called a neo acid in which the alpha carbon atom is quaternary; or the like.). Note that these polyol ester oils may have a free hydroxyl group.

The polyol ester oil is preferably an ester of a hindered alcohol (neopentyl glycol, trimethylolethane, trimethylolpropane, trimethylolbutane, pentaerythritol or the like), and more preferably trimethylolpropane tripelargonate, pentaerythritol-2-ethylhexanoate, or pentaerythritol tetrapelargonate.

The complex ester oil is an ester of a fatty acid and a dibasic acid with a monohydric alcohol and a polyol. The fatty acid, dibasic acid, monohydric alcohol, and polyol that can be used are the same as those described above.

The polyol carbonate ester oil is an ester of carbonic acid and a polyol. Examples of the polyol include the same diols and polyols as described above. The polyol carbonate ester oil may also be a ring-opening polymer of a cyclic alkylene carbonate.

Examples of the ether-based refrigerating machine oil include a polyvinyl ether oil and a polyoxyalkylene oil.

Examples of the polyvinyl ether oil include a polymer obtained by polymerizing a vinyl ether monomer such as an alkyl vinyl ether, and a copolymer obtained by copolymerizing a vinyl ether monomer with a hydrocarbon monomer having an olefinic double bond.

The vinyl ether monomer may be used singly or in combination of two or more.

Examples of the hydrocarbon monomer having an olefinic double bond include ethylene, propylene, various butenes, various pentenes, various hexenes, various heptenes, various octenes, diisobutylene, triisobutylene, styrene, $\alpha$-methylstyrene, and various alkyl-substituted styrene. The hydrocarbon monomer having an olefinic double bond may be used singly or in combination of two or more.

The polyvinyl ether oil may be a block copolymer or a random copolymer.

Examples of the polyoxyalkylene oil include a polyoxyalkylene monool; a polyoxyalkylene polyol; an alkyl ether of a polyoxyalkylene monool or a polyoxyalkylene polyol; an ester of a polyoxyalkylene monool or a polyoxyalkylene polyol; and a polyoxyalkylene oil.

The polyoxyalkylene oil is preferably an alkyl ether or an ester of a polyoxyalkylene monool or a polyoxyalkylene polyol. Furthermore, the polyalkylene glycol oil is preferred as a polyoxyalkylene oil. In particular, an alkyl ether of a polyalkylene glycol, called a polyglycol oil, in which a terminal hydroxyl group of the polyalkylene glycol is capped with an alkyl group such as a methyl group, is preferred as the polyoxyalkylene oil.

The polyoxyalkylene monool and the polyoxyalkylene polyol may be produced, for example, by a method of ring-opening addition polymerization of an alkylene oxide having from 2 to 4 carbon atoms (ethylene oxide, propylene oxide or the like) with an initiator such as water or a hydroxyl group-containing compound in the presence of a catalyst such as an alkali hydroxide. Furthermore, an oxyalkylene unit in the polyalkylene chain may be the same in one molecule, or may contain two or more types of an oxyalkylene unit. It is preferable that one molecule contains at least an oxypropylene unit.

Examples of the initiator used in the reaction include water; a monohydric alcohol such as methanol or butanol; and a polyhydric alcohol such as ethylene glycol, propylene glycol, pentaerythritol, and glycerol.

Examples of the fluorine-based refrigerating machine oil include a compound in which a hydrogen atom in a synthetic oil (such as a mineral oil, a poly $\alpha$-olefin, an alkylbenzene, and an alkylnaphthalene, which will be described later) is replaced with a fluorine atom, a fluorine-containing oil, a perfluoropolyether oil, and a fluorinated silicone oil.

Examples of the mineral-based refrigerating machine oil include a mineral oil (such as a paraffin-based mineral oil and a naphthene-based mineral oil) that is obtained by refining a refrigerating machine oil fraction obtained by atmospheric or depressurized distillation of a crude oil through an appropriate combination of refining processes (solvent deasphalting, solvent extraction, hydrocracking, solvent dewaxing, catalytic dewaxing, hydrorefining, clay treatment, or the like).

Examples of the hydrocarbon-based synthetic oil include a poly $\alpha$-olefin, an alkylbenzenes, and an alkylnaphthalene.

Among them, the refrigerating machine oil is preferably at least one selected from the group consisting of a polyalkylene glycol oil, a polyol ester oil, a polyvinyl ether oil, a silicone oil, a fluorine-containing oil, a mineral oil, and a hydrocarbon synthetic oil, and more preferably at least one selected from the group consisting of a polyalkylene glycol oil, a polyol ester oil, a polyvinyl ether oil, a hydrocarbon synthetic oil, and a mineral oil.

The above refrigerating machine oil may further contain at least one selected from the group consisting of an antioxidant, an extreme pressure agent, an acid scavenger, an oxygen scavenger, a copper deactivator, a rust inhibitor, an oiliness agent, and an antifoaming agent.

A content of the refrigerating machine oil in the thermal cycle composition may be within a range that does not significantly reduce the effects in the present disclosure, and is preferably 10 parts by mass or more and 100 parts by mass or less, and more preferably 20 parts by mass or more and 50 parts by mass or less, with respect to 100 parts by mass of the working medium.

(Additives)

The thermal cycle composition may contain at least one known additive selected from the group consisting of a tracer, a stabilizer, a polymerization inhibitor, and a leak detection substance, in addition to the working medium and the refrigerating machine oil.

The tracer is preferably added at a detectable concentration so that any dilution, contamination, or other change in the working medium in the present disclosure can be tracked.

The tracer contained in the working medium in the present disclosure may be used singly, or in combination of two or more.

The tracer is not particularly limited and may be appropriately selected from commonly used tracers. It is preferable to select, as the tracer, a compound that cannot be unavoidably introduced impurity into the working medium in the present disclosure

Preferred examples of the tracer include the following compounds.

HC-40 (chloromethane, $CH_3Cl$)
HFC-161 (fluoroethane, $CH_3CH_2F$)
HFC-245fa (1,1,1,3,3-pentafluoropropane, $CF_3CH_2CHF_2$)
HFC-236fa (1,1,1,3,3,3-hexafluoropropane, $CF_3CH_2CF_3$)
HFC-236ea (1,1,1,2,3,3-hexafluoropropane, $CF_3CHFCHF_2$)
HCFC-22 (chlorodifluoromethane, $CHClF_2$)
HCFC-31 (chlorodifluoromethane, $CH_2ClF$)
CFC-1113 (chlorotrifluoroethylene, $CF_2=CClF$)
HFE-125 (trifluoromethyl difluoromethyl ether, $CF_3OCHF_2$)
HFE-143a (trifluoromethyl methyl ether, $CF_3OCH_3$)
HFE-227ea (trifluoromethyl tetrafluoroethyl ether, $CF_3OCHFCF_3$)
HFE-236fa (trifluoromethyl trifluoroethyl ether, $CF_3OCH_2CF_3$)

A content of the tracer is preferably from 10 to 1000 ppm by mass, more preferably from 3 to 500 ppm by mass, even more preferably from 5 to 300 ppm by mass, particularly preferably from 75 to 250 ppm by mass, and most preferably from 10 to 200 ppm by mass, with respect to a total amount of the working medium.

The stabilizer is a component that improves the stability of the working medium for thermal cycle against heat and oxidation. Examples of the stabilizer include conventionally known stabilizers, such as an oxidation resistance improver, a heat resistance improver, and a metal deactivator.

Examples of the oxidation resistance improver and the heat resistance improver include N,N'-diphenylphenylenediamine, p-octyldiphenylamine, p,p'-dioctyldiphenylamine, N-phenyl-1-naphthylamine, N-phenyl-2-naphthylamine, N-(p-dodecyl)phenyl-2-naphthylamine, di-1-naphthylamine, di-2-naphthylamine, N-alkylphenothiazine, 6-(tert-butyl) phenol, 2,6-di-(tert-butyl)phenol, 4-methyl-2,6-di-(tert-butyl)phenol, and 4,4'-methylenebis(2,6-di-tert-butylphenol). The oxidation resistance improver and the heat resistance improver may be used singly, or in combination of two or more, respectively.

Examples of the metal deactivator include imidazole, benzimidazole, 2-mercaptobenzthiazole, 2,5-dimethylcaptothiadiazole, salicylidin-propylenediamine, pyrazole, benzotriazole, tolutriazole, 2-methylbenzamidazole, 3,5-dimethylpyrazole, methylenebis-benzotriazole, an organic acid or their esters, primary, a secondary or tertiary aliphatic amine, an amine salt of an organic or inorganic acid, a heterocyclic nitrogen-containing compound, and an amine salt of an alkyl acid phosphate or derivatives thereof.

A content of the stabilizer may be within a range that does not significantly reduce the effects in the present disclosure, and is usually from 0.01 to 5% by mass, preferably from 0.05 to 3% by mass, more preferably 0.1 to 2% by mass, even more preferably 0.25 to 1.5% by mass, and particularly preferably 0.5 to 1% by mass, with respect to 100 parts by mass of the working medium.

The polymerization inhibitor is not particularly limited and may be appropriately selected from among commonly used polymerization inhibitors. The polymerization inhibitor contained in the working medium in the present disclosure may be used singly, in combination of two or more.

Examples of the polymerization inhibitor include 4-methoxy-1-naphthol, hydroquinone, hydroquinone methyl ether, dimethyl-tert-butylphenol, 2,6-di-tert-butyl-p-cresol, and benzotriazole.

A content of the polymerization inhibitor is not particularly limited and is usually from 0.01 to 5% by mass, preferably from 0.05 to 3% by mass, more preferably from 0.1 to 2% by mass, even more preferably from 0.25 to 1.5 % by mass, and particularly preferably 0.5 to 1% by mass, with respect to a total amount of the working medium.

Examples of the leak detection substance include an ultraviolet fluorescent dye, odorous gas, and an odor masking agent.

Examples of the ultraviolet fluorescent dye include conventional ultraviolet fluorescent dyes such as those described in U.S. Patent No. 4,249,412, Japanese Patent Application Publication (Translation of PCT Application) (JP-T) No. 10-502737, JP-T No. 2007-511645, JP-T No. 2008-500437, and JP-T No. 2008-531836.

Examples of the odor masking agent include conventional fragrances such as those described in JP-T No. 2008-500437 and JP-T No. 2008-531836.

In a case in which a leak detection substance is used, a solubilizer that improves the solubility of the leak detection substance in the thermal cycle working medium may be used.

Examples of the solubilizer include those described in JP-T No. 2007-511645, JP-T No. 2008-500437, and JP-T No. 2008-531836.

A content of the leak detection substance may be within a range that does not significantly reduce the effects in the present disclosure, and is preferably 2 parts by mass or less, and more preferably 0.5 parts by mass or less, with respect to 100 parts by mass of the working medium.

Examples of thermal cycles to which the thermal cycle composition is applied are the same as those described for the working medium.

(Thermal cycle device and Thermal cycle method)

The thermal cycle device in the present disclosure includes: the working medium in the present disclosure; a compressor to compress a vapor of the working medium; a condenser to cool and liquefy a vapor of the working medium discharged from the compressor; a pressure reducing device to reduce a pressure of the working medium discharged from the condenser; and an evaporator to heat the working medium discharged from the pressure reducing device.

The working medium applied to the thermal cycle device may be used as a composition for thermal cycles.

The thermal cycle method in the present disclosure includes: compressing a vapor of the working medium in the present disclosure; cooling and liquefying a vapor of the working medium; reducing a pressure of the working medium after liquefying; and heating the decompressed working medium after the reducing.

In particular, in a case in which a working medium I having a content of HFO-1234ze(E) of from 80.0 to 90.0 % by mass with respect to a total amount of the working medium is applied (more particularly, in a case in which a working medium I having a total content of HFO-1234ze(E), HCFO-1224yd(Z), and HFC-134a of 99.0 % by mass or more with respect to the total amount of the working medium is applied), the evaporator is operated at an evaporation temperature of the working medium I of from -40 to 7°C. The evaporation temperature of the working medium in the evaporator may be automatically controlled.

In addition, in the thermal cycle method using the working medium I, the depressurized working medium is heated at an evaporation temperature of from -40 to 7°C. In the case of the working medium I, by setting the evaporation temperature at from -40 to 7°C, the discharge temperature may be lowered while the evaporation pressure is secured.

In the present disclosure, the evaporation temperature means the temperature at which the working medium absorbs heat and becomes vapor during the evaporation process of the thermal cycle device.

In the present disclosure, the condensation temperature means the temperature at which the vapor of the working medium releases heat and becomes liquid during the condensation process of the thermal cycle device.

The evaporation temperature may be determined by measuring a temperature of at least one of the evaporator inlet and evaporator outlet. In the case of a single medium and an azeotropic mixed medium, the evaporation temperature is constant, but in the case of a non-azeotropic mixed medium, it is the average temperature of the evaporation start temperature and the evaporation end temperature, and therefore it is calculated as "evaporation temperature = (evaporation start temperature + evaporation end temperature) / 2".

In addition, the condensation temperature can be determined by measuring a temperature of at least one of the condenser inlet and condenser outlet. In the case of a single medium and an azeotropic mixed medium, the condensation temperature is constant, but in the case of a non-azeotropic mixed medium, it is the average temperature of the condensation start temperature and the condensation end temperature, and therefore it is calculated as "condensation temperature = (condensation start temperature + condensation end temperature) / 2".

The thermal cycle device to which the working medium in the present disclosure is applied may be a heat pump device that uses hot heat obtained in a condenser, or a refrigeration cycle device that uses cold heat obtained in an evaporator. The thermal cycle device in the present disclosure may be a direct expansion type or an indirect expansion type. An example of an indirect expansion type is a flooded evaporator type.

The thermal cycle includes a series of cycles in which the working medium is (1) compressed in a gaseous state by a compressor, (2) cooled in a condenser to change to a high-pressure liquid state, (3) depressurized by an expansion valve, which is an example of a pressure-reducing device, and (4) vaporized at a low temperature in an evaporator to absorb heat via the latent heat of vaporization. Compressors can be classified into turbo (centrifugal), reciprocating, rotary, twin screw, single screw, scroll compressors or the like depending on the method of compressing the working medium in a gaseous state, and can be selected based on heat capacity, compression ratio, and size.

A thermal cycle device to which the working medium in the present disclosure is applied will be described below with reference to the drawings, taking a refrigeration cycle as an example. In a refrigeration cycle, the working medium removes thermal energy from a load fluid in an evaporator, thereby cooling the load fluid to a lower temperature.

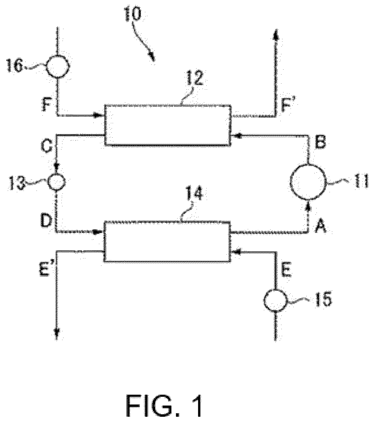

FIG. 1 is a schematic diagram showing an example of a refrigeration cycle device in the present disclosure. The refrigeration cycle device 10 is a system generally including: a compressor 11 for compressing working medium vapor A to produce high-temperature, high-pressure working medium vapor B; a condenser 12 for cooling and liquefying the working medium vapor B discharged from the compressor 11 to produce low-temperature, high-pressure working medium C; an expansion valve 13 for expanding the working medium C discharged from the condenser 12 to produce low-temperature, low-pressure working medium D; an evaporator 14 for heating the working medium D discharged from the expansion valve 13 to produce high-temperature, low-pressure working medium vapor A; a pump 15 for supplying a load fluid E to the evaporator 14; and a pump 16 for supplying fluid F to the condenser 12.

In the refrigeration cycle device 10, the following cycles (i) to (iv) are repeated.

(i) The working medium vapor A discharged from the evaporator 14 is compressed by the compressor 11 to produce high-temperature, high-pressure working medium vapor B (hereinafter referred to as the "AB process").
(ii) The working medium vapor B discharged from the compressor 11 is cooled by fluid F in the condenser 12 and liquefied to produce low-temperature, high-pressure working medium C. At this time, fluid F is heated to produce fluid F', which is discharged from the condenser 12 (hereinafter referred to as the "BC process").
(iii) The working medium C discharged from the condenser 12 is expanded by the expansion valve 13 to produce low-temperature, low-pressure working medium D (hereinafter referred to as the "CD process").
(iv) The working medium D discharged from the expansion valve 13 is heated by load fluid E in the evaporator 14 to produce high-temperature, low-pressure working medium vapor A. At this time, the load fluid E is cooled to become load fluid E', which is discharged from the evaporator 14 (hereinafter referred to as the "DA process").

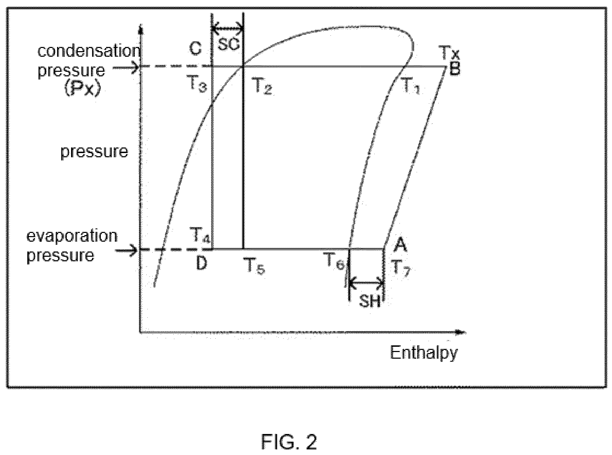

The refrigeration cycle device 10 is a cycle system including adiabatic/isentropic change, isenthalpic change, and isobaric change. In a case in which the state change of the working medium is plotted on the pressure-enthalpy line (curve) diagram shown in FIG. 2, it can be expressed as a trapezoid with vertices A, B, C, and D.

The AB process is a process in which adiabatic compression is performed in the compressor 11 to convert low-temperature, low-pressure working medium vapor A into high-temperature, high-pressure working medium vapor B, and is shown by line AB in FIG. 2. As described later, the working medium vapor A is introduced into the compressor 11 in a superheated state, and the resulting working medium vapor B is also superheated vapor. The compressor intake gas density is the density ($\rho s$) of state A in FIG. 2. The compressor discharge temperature (discharge temperature) is the temperature (Tx) in state B in FIG. 2, and is the maximum temperature in the refrigeration cycle. The compressor discharge pressure (discharge pressure) is the pressure (Px) in state B in FIG. 2, and is the maximum pressure in the refrigeration cycle. Note that the BC process is isobaric cooling, and therefore the discharge pressure shows the same value as the condensation pressure. Therefore, for convenience, the condensation pressure is shown as Px in FIG. 2.

In a case in which the working medium I is used, it is preferable that the discharge temperature (Td) is lower than the discharge temperature of HFC-134a. The reduction effect (%) of the discharge temperature based on the discharge temperature of HFC-134a (i.e., -(discharge temperature of each working medium (°C) - discharge temperature of HFC-134a (°C)) / discharge temperature of HFC-134a (°C) $\times$ 100) is preferably 0.0% or more, more preferably 2.0% or more, and even more preferably 4.0% or more.

The BC process is a process in which isobaric cooling is performed in the condenser 12 to convert high-temperature, high-pressure working medium vapor B into low-temperature, high-pressure working medium C, and is shown by line BC in FIG. 2. The pressure at this time is the condensation pressure. Among the intersections of the pressure-enthalpy line and the BC line, the intersection point $T_1$ on the high enthalpy side is the condensation temperature, and the intersection point $T_2$ on the low enthalpy side is the condensation boiling point temperature. The temperature gradient in a case in which the working medium is a non-azeotropic mixture is shown as the difference between $T_1$ and $T_2$.

In a case in which the working medium I is applied, the condensation temperature in the BC process is preferably 20°C or higher, more preferably 30°C or higher, and even more preferably 36°C or higher.

In a case in which the working medium I is applied, the condensation temperature in the BC process is preferably 90°C or lower, more preferably 80°C or lower, and even more preferably 66°C or lower. By setting the compression temperature to 90°C or lower, it can be made less than or equal to the critical temperature. The critical temperature is the temperature at an end of the high pressure and high temperature sides of the saturated liquid line and saturated vapor line. Above the critical temperature, there is no evaporation or liquefaction phenomenon, the liquid phase and the gas phase cannot be distinguished, and there is no phase change. In a case in which the temperature of the working medium is less than or equal to the critical temperature, the working medium can be liquefied (condensed) and refrigeration performance can be maintained.

The CD process is a process in which isenthalpic expansion is performed in the expansion valve 13 to change the low temperature, high pressure working medium C into the low temperature, low pressure working medium D, and is shown by the CD line in FIG. 2. In a case in which the temperature of the low temperature, high pressure working medium C is represented by $T_3$, then $T_2$-$T_3$ is the degree of supercooling (SC) of the working medium in cycles (i) to (iv).

The DA process is a process in which isobaric heating is performed in the evaporator 14 to return the low-temperature, low-pressure working medium D to high-temperature, low-pressure working medium vapor A, and is shown by the DA line in FIG. 2. The pressure at this time is the evaporation pressure. Among the intersections of the pressure-enthalpy line and the DA line, the intersection point $T_6$ on the high-enthalpy side is the evaporation temperature. The temperature gradient in the evaporator in a case in which the working medium is a non-azeotropic mixture is shown as the

difference between $T_6$ and $T_4$. In a case in which the temperature of the working medium vapor A is shown as $T_7$, $T_7$-$T_6$ is the degree of superheat (SH) of the working medium in the cycles (i) to (iv). Note that $T_4$ indicates the temperature of the working medium D.

In a case in which the working medium I is applied, the evaporation temperature in the DA process is preferably -40°C or higher, more preferably -25°C or higher, and even more preferably - 15°C or higher. By setting the evaporation temperature to -40°C or higher, the evaporation pressure can be 0.0295 MPa or higher, by setting it to -25°C or higher, the evaporation pressure can be 0.0645 MPa or higher, and by setting it to -15°C or higher, the evaporation pressure can be 0.101 MPa or higher.

Furthermore, in a case in which the working medium I is applied, the evaporation temperature in the DA process is preferably 7°C or lower, and more preferably 5°C or lower. By setting the evaporation temperature to 7°C or lower, the discharge temperature can be lowered.

In a case in which the working medium I is applied, the degree of superheat (SH) of the working medium is preferably from 0 to 20°C from the viewpoint of lowering the discharge temperature.

The CAP and COP of the working medium can be calculated using the enthalpies hA, hB, hC, and hD at respective states A (after evaporation, low temperature and low pressure), B (after compression, high temperature and high pressure), C (after condensation, low temperature and high pressure), and D (after expansion, low temperature and low pressure), as well as the refrigerant mass flow rate "qmr", according to equations (11), (12), (13), and (14), respectively. he refrigerant mass circulation amount qmr. It is assumed that there is no pressure loss in the piping and heat exchangers.

In a case in which a work loss of the compressor is added to the working medium as heat, the working medium vapor B' after the AB process is expressed by the following formula using the compressor efficiency η, and hA and hB.

$$hB' = hA + (hB - hA) / \eta$$

The thermodynamic properties required to calculate the cycle performance of the working medium can be calculated based on the National Institute of Science and Technology (NIST) Reference Fluid Thermodynamic and Transport Properties Database (REFPROP 10.0), the generalized equation of state based on the corresponding state principle (Soave-Redlich-Kwong equation), and various thermodynamic relationship equations.

$$CAP = (hA - hD) \ x \ \rho s... (11)$$

$$COP = Q/P = qmr(hA - hD) / qmr(hB-hA) = (hA - hD) / (hB - hA)... (12)$$

$$Q = qmr(hA - hD)... (13)$$

$$P = qmr(hB - hA)... (14)$$

When compressor efficiency is taken into account, COP and P are expressed as follows:

$$COP = Q/P = (hA - hD) / (hB' - hA)... (15)$$

$$P = qmr(hB' - hA)... (16)$$

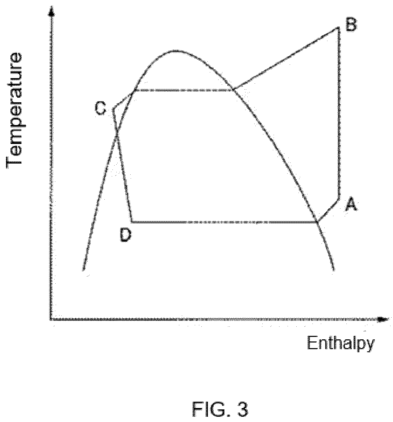

Similarly, the change in state of the working medium can be plotted on a temperature-entropy diagram as shown in FIG. 3.

The thermal cycle device in the present disclosure is filled with a working medium in a state where both the gas phase and the liquid phase coexist, and the air concentration of the gas phase in the thermal cycle device at a temperature of 25°C is preferably 3.5% by volume or less, more preferably 2.5% by volume or less, even more preferably 2.0% by volume or less, and particularly preferably 1.5% by volume or less.

EXAMPLE

The present disclosure will be described in more detail below using examples, but the present disclosure is not limited to these examples. In the following examples, Examples 1 to 9, 16, and 17 are examples, and Examples 10 to 15, 18, and 19 are comparative examples.

<COP, CAP and the like>

The items shown in Table 1 were calculated for the working medium. The method for calculating each item is as described above. The difference between the dew point temperature and the boiling point temperature, specific heat ratio, heat of combustion, GWP, evaporation glide, condensation glide, and discharge temperature (Td) in Table 1 are absolute values, the discharge temperature difference (Td134a difference) is a difference value based on the value of HFC-134a (Example 15), and CAP, COP, Pc, Pe, and discharge temperature reduction effect (Td vs. 134a) are relative values based on the value of HFC-134a (Example 15).

[Table 1]

| Example | HFO-1234ze (E) | HCFO-1224yd(Z) | HFC-134a | Difference dew point - boiling point | Specific heat ratio | Heat of combus-tion | GWP (AR5) | Evapora-tion glide | Condensa-tion glide | COP | CAP | Pc | Pe | Td | Td 134a differ-ence | Td vs. 134a |
|---|---|---|---|---|---|---|---|---|---|---|---|---|---|---|---|---|
| | wt% | wt% | wt% | °C | - | MJ/kg | - | °C | °C | - | - | - | - | °C | °C | % reduction |
| 1 | 90.0 | 5.0 | 5.0 | 1.54 | 1.102 | 9.775 | 66 | 1.15 | 1.20 | 0.998 | 0.728 | 0.74 | 0.72 | 59.6 | -6.5 | 9.78 |
| 2 | 90.0 | 3.0 | 7.0 | 1.10 | 1.102 | 9.790 | 92 | 0.80 | 0.89 | 0.997 | 0.746 | 0.76 | 0.74 | 59.5 | -6.5 | 9.89 |
| 3 | 87.0 | 3.0 | 10.0 | 1.22 | 1.103 | 9.692 | 131 | 0.88 | 1.00 | 0.996 | 0.755 | 0.77 | 0.75 | 59.8 | -6.2 | 9.47 |
| 4 | 85.0 | 10.0 | 5.0 | 2.86 | 1.102 | 9.572 | 66 | 2.19 | 2.21 | 1.000 | 0.700 | 0.72 | 0.68 | 60.2 | -5.8 | 8.75 |
| 5 | 85.0 | 5.0 | 10.0 | 1.77 | 1.103 | 9.611 | 131 | 1.31 | 1.41 | 0.998 | 0.743 | 0.76 | 0.73 | 60.1 | -6.0 | 9.04 |
| 6 | 82.5 | 3.0 | 14.5 | 1.36 | 1.104 | 9.545 | 189 | 0.98 | 1.13 | 0.996 | 0.769 | 0.78 | 0.76 | 60.2 | -5.8 | 8.85 |
| 7 | 80.0 | 10.0 | 10.0 | 3.15 | 1.102 | 9.409 | 131 | 2.39 | 2.47 | 1.000 | 0.715 | 0.73 | 0.70 | 60.8 | -5.2 | 7.95 |
| 8 | 80.0 | 5.5 | 14.5 | 2.07 | 1.103 | 9.444 | 189 | 1.53 | 1.66 | 0.998 | 0.754 | 0.77 | 0.74 | 60.6 | -5.5 | 8.29 |
| 9 | 75.5 | 10.0 | 14.5 | 3.36 | 1.103 | 9.261 | 189 | 2.55 | 2.65 | 1.000 | 0.729 | 0.74 | 0.71 | 61.2 | -4.8 | 7.26 |
| 10 | 80.0 | 15.0 | 5.0 | 4.18 | 1.101 | 9.369 | 66 | 3.24 | 3.25 | 1.003 | 0.672 | 0.69 | 0.64 | 60.9 | -5.1 | 7.72 |
| 11 | 70.0 | 15.0 | 15.0 | 4.81 | 1.103 | 9.042 | 196 | 3.70 | 3.80 | 1.003 | 0.701 | 0.72 | 0.67 | 62.0 | -4.0 | 6.03 |
| 12 | 70.0 | 10.0 | 20.0 | 3.56 | 1.104 | 9.082 | 261 | 2.71 | 2.83 | 1.000 | 0.744 | 0.76 | 0.73 | 61.8 | -4.3 | 6.45 |
| 13 | 64.0 | 12.0 | 24.0 | 4.28 | 1.105 | 8.870 | 313 | 3.29 | 3.40 | 1.001 | 0.743 | 0.76 | 0.72 | 62.5 | -3.6 | 5.39 |
| 14 | 100.0 | 0.0 | 0.0 | 0.00 | 1.101 | 10.141 | 1 | 0.00 | 0.00 | 0.995 | 0.739 | 0.76 | 0.74 | 58.4 | -7.6 | 11.50 |
| 15 | 0.0 | 0.0 | 100.0 | 0.00 | 1.119 | 6.873 | 1300 | 0.00 | 0.00 | 1.000 | 1.000 | 1.00 | 1.00 | 66.0 | 0.0 | 0.00 |
| 16 | 87.0 | 10.0 | 3.0 | 2.72 | 1.101 | 9.637 | 40 | 2.10 | 2.09 | 1.000 | 0.694 | 0.71 | 0.68 | 60.0 | -6.0 | 9.10 |
| 17 | 80.5 | 5.0 | 14.5 | 1.93 | 1.104 | 9.464 | 189 | 1.42 | 1.56 | 0.997 | 0.757 | 0.77 | 0.75 | 60.5 | -5.5 | 8.39 |
| 18 | 65.5 | 20.0 | 14.5 | 6.17 | 1.103 | 8.856 | 189 | 4.78 | 4.92 | 1.006 | 0.671 | 0.69 | 0.63 | 62.7 | -3.3 | 5.00 |
| 19 | 77.0 | 20.0 | 3.0 | 5.28 | 1.101 | 9.232 | 40 | 4.13 | 4.14 | 1.006 | 0.639 | 0.65 | 0.60 | 61.3 | -4.7 | 7.09 |

As shown in Table 1, in Examples 1 to 9, 16, and 17, specific components were included, the content of HFC-134a was 14.5% by mass or less with respect to the total content of the specific components, and the content of HCFO-1224yd(Z) was 10.0% by mass or less with respect to the total content of the specific components, and therefore the GWP and specific heat ratio were reduced, a significant increase in flammability was suppressed, and the increase in temperature glide was suppressed by suppressing the difference between the dew point temperature and the boiling point temperature. In addition, the discharge temperature (Td) was also reduced, and the effect of reducing the discharge temperature for HFC-134a was confirmed.

On the other hand, Examples 14 and 15 each contained only one of the three types of specific components, and therefore exhibited a high value in at least one of the items: GWP, specific heat ratio, or flammability.

In Examples 10, 11, 18, and 19, the content of HCFO-1224yd(Z) was more than 10.0% by mass, and it was found that the difference between the dew point temperature and the boiling point temperature was large and the temperature glide was high.

In Examples 12 and 13, the content of HFC-134a was more than 14.5% by mass, and it was found that the difference between the dew point temperature and the boiling point temperature was large and the temperature glide was high, and furthermore, the GWP was also high.

<Evaporation pressure>

Table 2 shows the saturated vapor pressure at temperature (Te') for the working mediums of Examples 1 to 19. When the working medium is a single medium or an azeotropic mixture medium, the saturated liquid pressure and the saturated vapor pressure at the same temperature are substantially the same. On the other hand, when the working medium is a non-azeotropic medium, the saturated liquid pressure and the saturated vapor pressure at the same temperature are different, and the saturated vapor pressure is lower than the saturated liquid pressure.

The evaporation pressure is calculated as follows: evaporation temperature = (evaporation start temperature + evaporation end temperature) / 2, where evaporation temperature is the average temperature of evaporation start temperature and evaporation end temperature. Therefore, the minimum evaporation pressure can be estimated from the saturated vapor pressure at the temperature that is set and controlled as the evaporation temperature.

[Table 2]

| Example | Saturated vapor pressure (MPa) | | | | | | | | | |
|---|---|---|---|---|---|---|---|---|---|---|
| | Te'=7°C | Te'=5°C | Te'=0°C | T-e'=-1-0°C | T-e'=-1-5°C | T-e'=-2-0°C | T-e'=-2-5°C | T-e'=-3-0°C | T-e'=-4-0°C | T-e'=-5-0°C |
| 1 | 0.2656 | 0.2474 | 0.2060 | 0.1394 | 0.1132 | 0.0910 | 0.0724 | 0.0569 | 0.0339 | 0.0191 |
| 2 | 0.2749 | 0.2562 | 0.2136 | 0.1450 | 0.1179 | 0.0949 | 0.0756 | 0.0596 | 0.0356 | 0.0202 |
| 3 | 0.2780 | 0.2591 | 0.2161 | 0.1467 | 0.1193 | 0.0960 | 0.0765 | 0.0603 | 0.0361 | 0.0204 |
| 4 | 0.2479 | 0.2306 | 0.1915 | 0.1287 | 0.1041 | 0.0833 | 0.0660 | 0.0516 | 0.0304 | 0.0169 |
| 5 | 0.2706 | 0.2520 | 0.2099 | 0.1421 | 0.1154 | 0.0928 | 0.0738 | 0.0580 | 0.0346 | 0.0195 |
| 6 | 0.2828 | 0.2635 | 0.2198 | 0.1492 | 0.1214 | 0.0978 | 0.0779 | 0.0614 | 0.0368 | 0.0208 |
| 7 | 0.2523 | 0.2347 | 0.1949 | 0.1310 | 0.1060 | 0.0848 | 0.0672 | 0.0526 | 0.0310 | 0.0172 |
| 8 | 0.2732 | 0.2544 | 0.2119 | 0.1434 | 0.1164 | 0.0935 | 0.0744 | 0.0585 | 0.0348 | 0.0196 |
| 9 | 0.2563 | 0.2384 | 0.1980 | 0.1331 | 0.1077 | 0.0862 | 0.0683 | 0.0534 | 0.0315 | 0.0175 |
| 10 | 0.2308 | 0.2144 | 0.1775 | 0.1185 | 0.0955 | 0.0761 | 0.0600 | 0.0467 | 0.0272 | 0.0149 |
| 11 | 0.2385 | 0.2216 | 0.1835 | 0.1225 | 0.0987 | 0.0786 | 0.0620 | 0.0483 | 0.0281 | 0.0154 |
| 12 | 0.2611 | 0.2429 | 0.2017 | 0.1357 | 0.1097 | 0.0879 | 0.0696 | 0.0545 | 0.0321 | 0.0178 |
| 13 | 0.2568 | 0.2388 | 0.1981 | 0.1328 | 0.1073 | 0.1039 | 0.0678 | 0.0529 | 0.0310 | 0.0171 |
| 14 | 0.2782 | 0.2593 | 0.2166 | 0.1474 | 0.1201 | 0.0969 | 0.0774 | 0.0611 | 0.0367 | 0.0209 |
| 15 | 0.3746 | 0.3497 | 0.2928 | 0.2006 | 0.1639 | 0.1327 | 0.1064 | 0.0844 | 0.0512 | 0.0295 |
| 16 | 0.2461 | 0.2289 | 0.1901 | 0.1278 | 0.1033 | 0.0827 | 0.0655 | 0.0512 | 0.0302 | 0.0168 |
| 17 | 0.2751 | 0.2562 | 0.2134 | 0.1445 | 0.1174 | 0.0944 | 0.0751 | 0.0591 | 0.0352 | 0.0198 |
| 18 | 0.2210 | 0.2051 | 0.1692 | 0.1122 | 0.0900 | 0.0715 | 0.0561 | 0.0435 | 0.0251 | 0.0136 |
| 19 | 0.2131 | 0.1978 | 0.1632 | 0.1083 | 0.0869 | 0.0690 | 0.0542 | 0.0420 | 0.0242 | 0.0131 |

As shown in Table 2, in the working mediums of Examples 1 to 9, 16 and 17, when Te' was from -40 to 7°C, the saturated vapor pressure estimated as the vapor pressure was 0.0295 MPa or more, when Te' was from -25 to 7°C, the saturated vapor pressure was 0.0645 MPa or more, and when Te' was from -15 to 7°C, the saturated vapor pressure was 0.101 MPa or more.

On the other hand, in Examples 10, 11, 18 and 19, in which, in the content of HCFO-1224yd(Z) was more than 10.0 % by mass, the saturated vapor pressure was less than 0.0295 MPa when Te' was -40°C, the saturated vapor pressure was less than 0.0645 MPa when Te' was -25°C, and the saturated vapor pressure was less than 0.101 MPa when Te' was -15°C.

<Discharge temperature>

For the working medium of Example 7, the refrigeration cycle state was calculated when the condensation temperature, evaporation temperature, degree of superheat (SH), degree of subcooling (SC), and compressor efficiency were set under the conditions in Table 3, and the discharge temperature was calculated.

Furthermore, for the working medium of Example 13, the refrigeration cycle state was calculated when the condensation temperature, evaporation temperature, degree of superheat (SH), degree of subcooling (SC), and compressor efficiency were set under the conditions in Table 4, and the discharge temperature was calculated.

Tables 3 and 4 also show the absolute value of the discharge temperature and the difference based on the discharge temperature of HFC-134a, as well as the reduction effect (%) of the discharge temperature based on the discharge temperature of HFC-134a (i.e., - (discharge temperature of each working medium (°C) - discharge temperature of HFC-134a (°C)) / discharge temperature of HFC-134a (°C) × 100).

[Table 3]

| Condensation temperature | Evaporation temperature | SH | SC | Compressor efficiency | Discharge temperature | Difference | Reduction effect |
|---|---|---|---|---|---|---|---|
| °C | °C | °C | °C | - | °C | °C | % |
| 45 | 7 | 5 | 0 | 0.7 | 58.73 | -4.16 | 6.61 |
| 45 | 5 | 5 | 0 | 0.7 | 59.29 | -4.46 | 7.00 |
| 45 | -15 | 5 | 0 | 0.7 | 66.24 | -7.75 | 10.47 |
| 45 | -25 | 5 | 0 | 0.7 | 70.94 | -9.58 | 11.90 |
| 45 | -40 | 5 | 0 | 0.7 | 80.12 | -12.56 | 13.55 |
| 36 | 7 | 5 | 0 | 0.7 | 48.67 | -2.93 | 5.68 |
| 50 | 7 | 5 | 0 | 0.7 | 64.21 | -4.79 | 6.94 |
| 55 | 7 | 5 | 0 | 0.7 | 69.61 | -5.44 | 7.25 |
| 60 | 7 | 5 | 0 | 0.7 | 74.96 | -6.05 | 7.47 |
| 66 | 7 | 5 | 0 | 0.7 | 81.32 | -6.78 | 7.70 |
| 36 | 7 | 0 | 0 | 0.7 | 43.59 | -8.01 | 15.52 |
| 36 | 7 | 20 | 0 | 0.7 | 63.97 | -2.96 | 4.42 |
| 36 | 7 | 20 | 0 | 1.0 | 55.84 | -2.58 | 4.42 |

[Table 4]

| Condensation temperature | Evaporation temperature | SH | SC | Compressor efficiency | Discharge temperature | Difference | Reduction effect |
|---|---|---|---|---|---|---|---|
| °C | °C | °C | °C | - | °C | °C | % |
| 45 | 7 | 5 | 0 | 0.7 | 60.21 | -2.68 | 4.26 |
| 45 | 5 | 5 | 0 | 0.7 | 60.82 | -2.93 | 4.60 |
| 45 | -15 | 5 | 0 | 0.7 | 68.45 | -5.54 | 7.49 |
| 45 | -25 | 5 | 0 | 0.7 | 73.56 | -6.96 | 8.64 |
| 45 | -40 | 5 | 0 | 0.7 | 83.45 | -9.23 | 9.96 |
| 36 | 7 | 5 | 0 | 0.7 | 49.95 | -1.65 | 3.20 |
| 50 | 7 | 5 | 0 | 0.7 | 65.78 | -3.22 | 4.67 |
| 55 | 7 | 5 | 0 | 0.7 | 71.28 | -3.77 | 5.02 |
| 60 | 7 | 5 | 0 | 0.7 | 76.73 | -4.28 | 5.28 |
| 66 | 7 | 5 | 0 | 0.7 | 83.19 | -4.91 | 5.57 |
| 36 | 7 | 0 | 0 | 0.7 | 44.87 | -6.73 | 13.04 |
| 36 | 7 | 20 | 0 | 0.7 | 65.25 | -1.68 | 2.51 |
| 36 | 7 | 20 | 0 | 1.0 | 56.98 | -1.44 | 2.46 |

Comparing Tables 3 and 4, it was confirmed that the working medium of Example 7 exhibited the reduction effect of the discharge temperature compared to the working medium of Example 13.

The working medium in the present disclosure can reduce the specific heat ratio, and therefore can suppress an increase in discharge temperature.

In particular, under operating conditions in which the discharge temperature tends to increase, in other words, conditions where the compression ratio becomes high (specifically, when the condensation temperature is high or the evaporation temperature is low), and under conditions where the degree of superheat is small, the benefit of the reduction effect of the discharge temperature achieved by applying the working medium in the present disclosure is significant.

<Stability test>

A pressure-resistant vessel made of SUS316 with an internal volume of 200 mL (maximum operating temperature: 300 °C; maximum operating pressure: 20 MPa) was prepared. A pre-weighed inner tube made of PYREX (Registered trademark) and three metal pieces - one each made of SS400, Cu, and Al (each piece measuring 20 mm × 30 mm and 2 mm in thickness) - were inserted into the vessel. After sealing the pressure-resistant vessel, the inside was evacuated. The inner tube was inserted to confirm whether a polymer was generated in the pressure test vessel.

Then, the working mediums of Examples 1, 7, 9, 16-19, which had been stored for one day in a thermostatic chamber set at 25°C, and air were filled into the pressure-resistant vessel. The amount of air filled was such that the air concentration in the gas phase at 25°C was as shown in Table 5.

The HFO-1234ze(E), HCFO-1224yd(Z) and HFC-134a having a purity of 99.5% by mass or higher were used.

The pressure-resistant vessel in which the working medium was enclosed together with air of a specified concentration was then placed in a hot air circulating thermostatic chamber and left at a constant temperature of 150°C for five days.

After five days had passed, the pressure-resistant vessel was removed from the thermostatic chamber and the appearance of the SS400, Cu and Al metal pieces was visually observed.

No changes were observed on the surface of the SS400 and Al metal pieces even when the air concentration was changed in the range of from 1.0 to 5.0% by volume. On the other hand, changes were observed on the surface of the Cu metal piece when the air concentration was changed in the range of from 1.0 to 5.0% by volume. Therefore, the appearance of the Cu metal pieces after the above test was compared with that of the Cu metal pieces before the test, and the metal corrosion resistance was evaluated according to the following criteria. The results are shown in Table 5.

A: The surface of the metal piece did not turn brown.
B: Part of the surface of the metal piece turned brown.
C: The entire surface of the metal piece turned brown and rust occurred.

[Table 5]

| Example | Working medium | | | Judgment of Cu metal pieces | | | |
|---|---|---|---|---|---|---|---|
| | HFO-1234ze(E) | HCFO-1224yd(Z) | HFC-134a | Air concentration (% by volume) | | | |
| | % by mass | % by mass | % by mass | 1.0 | 2.0 | 3.0 | 5.0 |
| 1 | 90.0 | 5.0 | 5.0 | A | A | B | C |
| 7 | 80.0 | 10.0 | 10.0 | A | A | A | C |
| 9 | 75.5 | 10.0 | 14.5 | A | A | B | C |
| 16 | 87.0 | 10.0 | 3.0 | A | A | B | C |
| 17 | 80.5 | 5.0 | 14.5 | A | A | B | C |
| 18 | 65.5 | 20.0 | 14.5 | A | A | B | C |
| 19 | 77.0 | 20.0 | 3.0 | A | A | A | C |

As shown in Table 5, at an air concentration of 5.0% by volume, the entire surface of the Cu metal pieces of Examples 1, 7, 9, and 16 to 19 turned brown, and the formation of rust was confirmed. In Examples 1, 9, and 16 to 18, the copper metal pieces exhibited partial discoloration to brown on their surfaces at an air concentration of 3.0% by volume; however, at an air concentration of 2.0% by volume or less, no brown discoloration and rust was observed on the surfaces. On the other hand, in Examples 7 and 19, in which the content of HFO-1234ze(E) was 86.5% by mass or less and the content of HFC-134a was 14.0% by mass or less, the copper metal pieces did not exhibit discoloration to brown on their surfaces and no rust formation occurred at an air concentration of 3.0% by volume or less.

The entire contents of the disclosures by Japanese Patent Application No. 2023-013601 are incorporated herein by reference.

All publications, patent applications, and technical standards mentioned in this specification are herein incorporated by reference to the same extent as if each individual publication, patent application, or technical standard was specifically and individually indicated to be incorporated by reference.

Explanation of References

| 10 | Refrigeration cycle system |
| 11 | Compressor |
| 12 | Condenser |
| 13 | Expansion valve |
| 14 | Evaporator |
| 15, 16 | Pump |

**Claims**

1. A working medium comprising (E)-1,3,3,3-tetrafluoropropene, (Z) 1-chloro-2,3,3,3-tetrafluoropropene, and 1,1,1,2-tetrafluoroethane, wherein, with respect to a total content of the (E)-1,3,3,3-tetrafluoropropene, the (Z) 1-chloro-2,3,3,3-tetrafluoropropene, and the 1,1,1,2-tetrafluoroethane,

   a content of the 1,1,1,2-tetrafluoroethane is 14.5% by mass or less,
   a content of the (Z) 1-chloro-2,3,3,3-tetrafluoropropene is 10.0% by mass or less, and
   a content of the (E)-1,3,3,3-tetrafluoropropene is 75.5% by mass or more.

2. The working medium according to claim 1, wherein a total content of the (E)-1,3,3,3-tetrafluoropropene, the (Z) 1-chloro-2,3,3,3-tetrafluoropropene and the 1,1,1,2-tetrafluoroethane is 90.0% by mass or more with respect to a total amount of the working medium.

3. The working medium according to claim 1 or 2, wherein the content of the (E)-1,3,3,3-tetrafluoropropene is from 80.0 to 90.0% by mass with respect to a total amount of the working medium.

4. The working medium according to claim 1, in which the air concentration at 25°C in a gas phase of the working medium is 3.5% by volume or less.

5. The working medium according to claim 4, wherein, with respect to the total amount of the working medium,

   a content of the (E)-1,3,3,3-tetrafluoropropene is 86.5% by mass or less, and
   a content of the 1,1,1,2-tetrafluoroethane is 14.0% by mass or less.

6. A composition for thermal cycle, the composition comprising the working medium according to claim 1 or 2 and a refrigerating machine oil.

7. The composition for thermal cycle according to claim 6, wherein the refrigerating machine oil is at least one selected from the group consisting of a polyalkylene glycol oil, a polyol ester oil, a polyvinyl ether oil, a hydrocarbon synthetic oil, and a mineral oil.

8. The composition for thermal cycle according to claim 6, wherein the refrigerating machine oil has a kinetic viscosity of 700 mm$^2$/s or less at 40°C.

9. A thermal cycle device comprising:

   the working medium according to claim 1;
   a compressor to compress a vapor of the working medium;
   a condenser to cool and liquefy a vapor of the working medium discharged from the compressor;
   a pressure reducing device to reduce a pressure of the working medium discharged from the condenser; and
   an evaporator to heat the working medium discharged from the pressure reducing device.

10. A thermal cycle device comprising:

> the working medium according to claim 3;
> a compressor to compress a vapor of the working medium;
> a condenser to cool and liquefy a vapor of the working medium discharged from the compressor;
> a pressure reducing device to reduce a pressure of the working medium discharged from the condenser; and
> an evaporator to heat the working medium discharged from the pressure reducing device,
> wherein the evaporator is controlled so that an evaporation temperature of the working medium is from -40°C to 7°C.

11. The thermal cycle device according to claim 10, wherein the evaporator is controlled so that the evaporation temperature of the working medium is from -25°C to 7°C.

12. The thermal cycle device according to claim 11, wherein the evaporator is controlled so that the evaporation temperature of the working medium is from -15°C and 7°C.

13. The thermal cycle device according to claim 9, wherein at least a portion of a surface of a component configuring the thermal cycle device that comes into contact with the working medium comprises at least one material selected from the group consisting of copper and copper alloys.

14. A thermal cycle device comprising:

> a working medium according to claim 4;
> a compressor to compress a vapor of the working medium;
> a condenser to cool and liquefy a vapor of the working medium discharged from the compressor;
> a pressure reducing device to reduce a pressure of the working medium discharged from the condenser; and
> an evaporator to heat the working medium discharged from the pressure reducing device,
> wherein at least a portion of a surface of a component configuring the thermal cycle device that comes into contact with the working medium comprises at least one selected from the group consisting of copper and copper alloys.

15. The thermal cycle device according to claim 13 or 14, wherein the component is at least one selected from the group consisting of the compressor, the condenser, the evaporator, and a refrigerant pipe.

16. A thermal cycle method comprising:

> compressing a vapor of the working medium according to claim 1 or 2;
> cooling and liquefying a vapor of the working medium;
> reducing a pressure of the working medium after liquefying; and
> heating the decompressed working medium after the reducing.

17. A thermal cycle method comprising:

> compressing a vapor of the working medium according to claim 3;
> cooling and liquefying a vapor of the working medium;
> reducing the pressure of the working medium after liquefying; and
> heating the decompressed working medium at an evaporation temperature of from - 40°C to 7°C after reducing.

FIG. 1

FIG. 2

FIG. 3

## INTERNATIONAL SEARCH REPORT

| | |
|---|---|
| International application No. | |
| | **PCT/JP2024/002523** |

**A. CLASSIFICATION OF SUBJECT MATTER**

*C09K 5/04*(2006.01)i; *C10M 105/38*(2006.01)i; *C10M 107/24*(2006.01)i; *C10M 107/34*(2006.01)i; *F25B 1/00*(2006.01)i;
*C10N 30/00*(2006.01)n; *C10N 40/30*(2006.01)n
FI:  C09K5/04 F; C10M107/24; C10M105/38; F25B1/00 396Z; C10M107/34 ZAB; C10N30:00 A; C10N40:30

According to International Patent Classification (IPC) or to both national classification and IPC

**B. FIELDS SEARCHED**

Minimum documentation searched (classification system followed by classification symbols)

C09K5/04; C10M105/38; C10M107/24; C10M107/34; F25B1/00; C10N30/00; C10N40/30

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | WO 2016/171264 A1 (ASAHI GLASS CO., LTD.) 27 October 2016 (2016-10-27)<br>claims, paragraphs [0031], [0042]-[0044], [0194]-[0242], working medium 41 | 1-17 |
| X | WO 2016/171256 A1 (ASAHI GLASS CO., LTD.) 27 October 2016 (2016-10-27)<br>claims, paragraphs [0036], [0037], [0167]-[0203], working medium 36 | 1-17 |
| X | WO 2019/022138 A1 (AGC INC.) 31 January 2019 (2019-01-31)<br>claims, paragraphs [0069], [0080]-[0087], [0122]-[0144], table 4, examples 3-15 | 1-17 |
| X | JP 2020-531633 A (THE CHEMOURS COMPANY, FC, LLC) 05 November 2020<br>(2020-11-05)<br>claims, paragraphs [0238], [0252], [0307]-[0310], table 5, example 2 | 1-17 |
| A | WO 2019/078165 A1 (DAIKIN INDUSTRIES, LTD.) 25 April 2019 (2019-04-25)<br>claims, examples | 1-17 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **03 April 2024** | **16 April 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

EP 4 660 278 A1

## INTERNATIONAL SEARCH REPORT
### Information on patent family members

International application No.

**PCT/JP2024/002523**

| Patent document cited in search report | | | Publication date (day/month/year) | Patent family member(s) | | | Publication date (day/month/year) |
|---|---|---|---|---|---|---|---|
| WO | 2016/171264 | A1 | 27 October 2016 | US | 2018/0066170 | A1 | |
| | | | | claims, paragraphs [0060], [0074]-[0076], [0231]-[0260], working medium 41 | | | |
| | | | | EP | 3287503 | A1 | |
| | | | | CN | 107532071 | A | |
| WO | 2016/171256 | A1 | 27 October 2016 | US | 2018/0044567 | A1 | |
| | | | | claims, paragraphs [0069]-[0071], [0209]-[0231], working medium 36 | | | |
| | | | | EP | 3287502 | A1 | |
| | | | | CN | 107532070 | A | |
| WO | 2019/022138 | A1 | 31 January 2019 | CN | 110869462 | A | |
| JP | 2020-531633 | A | 05 November 2020 | US | 2020/0230454 | A1 | |
| | | | | claims, paragraphs [0242], [0254], [0315]-[0317], table 5, example 2 | | | |
| | | | | WO | 2019/036049 | A1 | |
| | | | | EP | 3668937 | A1 | |
| | | | | CN | 111183200 | A | |
| WO | 2019/078165 | A1 | 25 April 2019 | US | 2021/0198547 | A1 | |
| | | | | claims, examples | | | |
| | | | | EP | 3699252 | A1 | |
| | | | | CN | 111194343 | A | |

Form PCT/ISA/210 (patent family annex) (July 2022)

27

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6555315 B
- US 4249412 A
- JP 10502737 W
- JP 2007511645 T
- JP 2008500437 T
- JP 2008531836 T
- JP 2023013601 A

**Non-patent literature cited in the description**

- Scientific Assessment of Ozone Depletion. *J. Phys. Chem. A*, 2018, vol. 122, 4593-4600
- Designation and Safety Classification of Refrigerants. *ANSI/ASHRAE Standard 34*, 2016
- **S. BENSON**. Thermo chemical kinetics. Wiley Interscience, 1976
- Refrigerant: Designation and Safety Classification. *ISO 817*, 2014